# EUROPEAN PATENT APPLICATION

(11) **EP 4 617 597 A2**
(43) Date of publication of application: **17.09.2025**
(21) Application number: 25193291.9
(22) Date of filing: 18.01.2022
(51) Int. Cl.: F26B 21/12

(54) **DRYING OF PHARMACEUTICAL POWDERS**

(30) Priority: 25.01.2021 PT 2021117030
(62) Divisional of application: 22700955.2
(71) Applicant: Hovione Scientia Limited, Ringaskiddy, Cork (IE)
(72) Inventor: VALENTE, Pedro, 1500-152 Lisboa (PT); SANTOS, Bruno, 2675-571 Odivelas (PT); GASPAR, Filipe, 2780-308 Oeiras (PT); MENDES, Adélio, 4100-497 Porto (PT); RIBEIRINHA, Paulo, 4470-442 Maia (PT); ROCHA, Fernando, 4150-724 Porto (PT); FERNANDES, Celina, 5040-029 Teixeira Bao (PT)
(74) Representative: Page White Farrer

(57) **Abstract**

The present invention relates to a method for drying the residual solvent content of a pharmaceutical product or powder. The present disclosure describes a method that allows fast drying of fine and cohesive pharmaceutical powders enabling it uses for batch, semi-continuous and continuous operation.

## Description

### Field of the invention

The technical field of the present invention relates to batch and continuous drying of pharmaceutical powders.

### Prior Art of the Invention

The present invention relates to drying of pharmaceutical powders to very low residual amounts of process solvents. The residual amount of process solvent in pharmaceutical powders for human consumption is strictly regulated [1] and depending on the toxicity of the solvent can range from a few hundred parts per million (ppm) up to 0.5 wt%. However, drying using established methods is a slow process that takes a considerable amount time [2], being often the process bottleneck and thus directly related to overall process productivity.

Established technologies for drying these pharmaceutical powders are mostly based on batch processes and include ovens and tray dryers, fluidized bed dryers, single drum dryers, vacuum dryers and freeze dryers [3]. Most of these technologies cannot be readily integrated into continuous operation due to the long drying times required to meet the required solvent levels (typically over 6 hours and up to several days) .

Furthermore, since the residence time within a continuous processing equipment is directly related to the drying time, and the product of residence time with the throughput is proportional to the total quantity of product within the equipment, there would be little difference in the footprint of the continuous versus the batch equipment.

Fluidized bed dryers, one of the most efficient dryers, can be run continuously or in batch, and have been successfully used in industry for medium and coarse granular materials [4]. However, these dryers are poorly suitable for fine and cohesive products, especially particles of size of below 100 microns due to the poor fluidising properties of such powders. Geldart *et al.* include these powders into group C and D, due to poor fluidization quality and formation stable spouted beds [10]. Additionally, these fine particles, due to low Stokes number, can be easily dragged by the gas causing product losses through the dust control system and/or leading eventually to clogging. They can also agglomerate changing product size distribution, lowering the drying rates and result in non-uniform product quality.

Vacuum contact drying is a process in which the drying materials are dried under vacuum reducing the temperature required for rapid drying [5]. In this method, heat is transferred mostly by conduction though it can also be supported by convection using steam or inert gases such as nitrogen or argon [5] [6]. Various types of vacuum dryers are used for drying pharmaceutical products including double-cone dryers, conical dryers with screw mixer, paddle dryers, vacuum band dryers and filter dryers. Drying times to reach the low residual levels of pharmaceutical powders are typically long, usually ranging from about 12 to 48 hours [5]. For these applications, the continuous versions of the vacuum contact technology are unsuitable due to the very large footprint requirement to allow the required residence times.

The challenge of shortening drying times, and eventually enabling continuous processing, was addressed previously.

Walter Kuelling described a "Continuous fluid bed" (US Pat. No 3475832A) that used high flowrates of a drying gas to suspend or fluidize small solid particles in a vertically rising stream so that gas and solid come into close contact. Later, Len. W. Hallen disclosed a conical screw type mixer/dryer with aggressive convection (US. Pat No 5709036A). The invention was developed especially for materials difficult to dry, providing an increased amount of material dried in an agitated pan type dryer. This is accomplished by creating turbulence within the dryer, particularly at the surface of the product, by forcing pressurized drying gas into the dryer at high velocity through a nozzle. Aware of the difficulties to remove the residual solvent from amorphous materials, D. Dobry, *et al.* proposed exposing the particles to a volatile mobility-enhancing agent (Pat. No EP2043610A1). The authors found that exposing the pharmaceutical amorphous material to agents such as water or ethanol reduces the glass-transition temperature (Tg) of the particles, resulting in an increase in the diffusion rate of the residual solvent and consequently in faster drying rates. Combining vacuum, agitation, and a stripping gas has been proposed by R. Ray et al. as a process to improve the drying time of amorphous with residual solvent content below 10 wt% (Pat. No CA2594694A1). Many other solutions and derivations of fluid bed drier were implemented to further dry spray dried material. For instance, in WO9513864 it is presented a configuration in which a vibrating fluidized bed are used downstream a spray drying unit, or in US20030230004A1 the inventors claim changes on fluidized bed inner chamber design to improve the performance for low batch size.

Despite the variety of methods available to dry pharmaceutical products to the required solvent content in the dried product, they are still not fully satisfying in terms of simplicity, drying times and overall productivity. In searching for greater performance from drying technologies, the use of microwave has also emerged. J. Hradecky *et al.* disclosed for the first time an equipment for "Microwave drying pharmaceutical gelatin capsules" aiming at reducing the time involved in the production of hard gelatin capsules and reduce the energy required to achieve the optimum moisture content in the capsule (Pat. No. US 4720924A). Until now, a variety of dryers based on microwaves were developed and microwaves were added as an alternative energy source in new methods. More recently, L. Bohle, et al. disclosed a "Method and device for drying pharmaceutical granulates, pellets or similar" using microwaves as a heating source (WO Pat. No WO2003027590A3). The product is dried in a rotary-driven transparent pipe, where a drying gas drives the vaporised moisture out. Also, I. Ghebre-Sellassie, et al. presented a method and apparatus for producing a pharmaceutical granulation product that considers a radio frequency or microwaves as heating source (Pat. No WO2001089679A2). Concerning microwave drying technology, and despite being a very fast and efficient drying process, the equipment is not well-established, and its construction is far from simple. Additionally, the use of microwave radiation in a drying operation brings several limitations, different from conventional drying operation. The drying processes using microwave as radiation source face some critical challenges, namely: the impact on the quality and stability of the pharmaceutical products; unequal radiation distribution within the drying chamber; a sealed containment is required to avoid microwave radiation leakage.

As a result of the above-mentioned advantages and drawbacks of each drying method, for fine and cohesive products, such as amorphous solids produced by spraying drying, the secondary drying step is normally performed in dryers with vacuum (typically below 0.1 bar), such as tray dryers, biconical dryers or agitated conical dryers. The current state-of-the-art of these technologies does not overcome the need for long drying periods which on one hand turn them often into the bottlenecks of the entire drying process and on another hand prevent their conversion into semi-continuous or continuous manufacturing.

The extended drying times observed for fine and cohesive pharmaceutical powders, such as those resulting from spray drying processes, result mostly from the extremely slow drying kinetics observed at the later stages of drying (typically down from 1-3% w/w), often referred to as "falling-rate" or "hindered" drying [7]. The slow drying rate at the end of drying is often justified to drying stage controlled by intraparticle mass and heat transfer [7, 8, 9] and hence difficult to accelerate by most common means like enhanced convection. Ways of accelerating intraparticle heat transfer include, among others, the use of microwaves and other forms of energy, whereas intraparticle mass transfer may be accelerated by pressure bulk fluctuations, as tested by the inventors, by adding convection to the diffusion taking place in the porous network of any single particle.

In an effort to look for alternative drying methods that would accelerate considerably the drying kinetics the inventors found, surprisingly, that by applying a drying gas stream across the bed of powder material to be dried and at high velocities (high convection) one can reduce significantly the time required to reach the target solvent levels. This was initially tested by applying the drying gas downwards while supporting the bed of powder by a porous membrane. By supporting the bed of powder in a dryer by a permeable element of low pore size, such a filter/membrane, high drying gas flowrates can be used without powder loss nor the generation of preferential channels. The high flow rates not only drastically reduce the drying time, but also produced a uniform product with no to minor agglomeration, minimal losses and no filter/membrane clogging. Moreover, it was found that the drying time can be manipulated to some extent by changes in the drying gas flowrate. The reduced drying time is advantageous as they may enable conversion to semi-continuous and continuous manufacturing.

Contrasting to the prior art methods, the present disclosure describes a method that allows fast drying of fine and cohesive pharmaceutical powders enabling it uses for batch, semi-continuous and continuous operation.

### Objects of the invention

The object of the present invention is to provide a batch, semi-continuous or continuous drying method suitable for drying fine and cohesive pharmaceutical powders, down to the required solvent levels, based on convective drying.

Another object of the present invention is to provide a faster drying process to reduce residual solvents to a specification limit that is accepted for pharmaceutical products to ensure safely and quality of the products as per the International standards.

Another object of the present invention is to provide a batch, semi-continuous or continuous convective drying operation using high flowrates of drying gas and without causing product losses.

Another object of the present invention is to provide a method for drying the residual solvent content of a pharmaceutical product in the form of a powder with improved homogeneity.

### BRIEF DESCRIPTION OF THE INVENTION

The present invention discloses a method for drying fine and cohesive pharmaceutical powders (D_{V50} < 100 um and with low bulk density < 0.6 g/ml), such as those produced by a spray dryer unit or another known drying technique and contain an unacceptable solvent content as per international guidelines [1].

The present invention discloses a method for drying the residual solvent content of fine and cohesive pharmaceutical powders to an acceptable level, comprising the application of a gas stream across the powder bed in a drying chamber supported by a permeable element to the gas flow which retains the product.

It has been found that the rate of removal of the residual solvent is improved by increasing the drying gas flowrate and temperature. It was found that having the drying gas fed downwards through a fixed bed showed better results than in a fluid bed configuration. By supporting powders over a permeable element of low pore size, such a filter/membrane, high drying gas flowrates can be used without having the particles being dragged out of the dryer, as occurs in fluidized beds. Moreover, it was found through various experiments that none of the typical manifestation of preferential channel were observed, such us heterogeneity in the dried powder.

Preferably, the permeable element such as a filter or a membrane was supported over a sintered porous plate at the bottom of the drying chamber, allowing the drying gas to leave the apparatus keeping the drying product inside. The membrane may be porous, mechanically resistant and with little/no affinity to the drying product. The permeable element aids in locking the particles in place, thereby enabling high drying gas flowrates to be used, which in turn increases the velocity between the gas flow and particles, resulting in faster drying.

A drying gas, previously heated to a target drying temperature, was fed downwards in the drying chamber. The drying chamber surface was also preferably heated to a target drying temperature.

Additionally, a vibrational system may be incorporated in the drying apparatus for vibrating or agitating the apparatus. Applying vibration can avoid the formation of agglomerates of powders inside the dryer and allows detaching the product from the container walls.

In one aspect of the present invention, the homogeneity of the dried product/powder may also be improved by applying vibration, agitation, or other equivalent methods to the powder bed in the dryer. Also, clogging of particles in the permeable element may also be mitigated by applying vibration, agitation, or other equivalent methods to the powder bed.

The finding of the experiments in the present disclosure is that the main differentiating factor, allowing the substantial decrease in the drying time, was having gas stream across a powder bed supported by a permeable element, which increased the relative velocity between the gas and the powder particles. Such high relative velocity does not occur in commonly used convective dryers, such as in fluid bed dryers, since there is a limit above which the particles are pneumatically transported by the gas flow. The present method thus provides for a higher velocity gas stream across a powder bed that is supported by a permeable membrane. In view of the high velocity fine particles such as those below 100 microns can be dried much faster unlike in a fluidized bed dryer, which does not support high velocity between gas stream across the fluidized bed.

Preferably, the drying gas flow is substantially perpendicular to the permeable element.

In one aspect of the invention, the gas flow is directed downwards though the drying method can also be applied employing upwards or radial flow as long as the particles are held in place by the permeable element which enables the high relative gas velocity between the gas and the powder particles. For example, in a upwards flow method by feeding the gas steam from the bottom, where the permeable element would be on the top, the flow velocity could benefit from being sufficiently high such that at the start of the drying operation the aerodynamic drag force on the particles would be larger than the gravitational force and thus, the particles would be dragged into the permeable element and powder bed where they would be held in place.

The present invention thus provides an improved method of drying fine and cohesive products such as pharmaceutical powders, comprising the following steps:
i) feeding or loading a pharmaceutical powder into a drying chamber;
ii) feeding a gas stream across a powder bed in the drying chamber, and
iii) providing a permeable element to support the powder bed. The drying gas may be heated prior to feeding into the drying chamber such that the powder is pushed against the permeable element at high flowrate to maximize relative velocity between the gas stream and the powder particles.

The dried powder particles or product are then discharged from the dryer.

The powder bed may be formed as the powder which is fed or loaded into the drying chamber settles over the membrane/sintered plate. The powder to be dried may also be introduced along with the drying gas into the drying chamber. The drying gas may drag the powder to be dried and create the powder bed.

Preferably, the drying gas stream flows, through the powder bed and the permeable element, downwards, upwards or radially.

The gas stream may be heated to the target drying temperature prior to feeding it into the drying chamber. Preferably, the drying chamber surface is heated to avoid heat losses, in particular during the initial stage. Preferably, the initial temperature was set to in the range of 40 °C to 70 °C using electric heaters, preferably to 40 °C, 50 °C, 52 °C, 55 °C and 70 °C.

The temperature of the gas may vary between the room temperature and the melting temperature or the glass transition temperature of the material. Preferably, the temperature is selected typically as the maximum as possible without compromising the quality of the product, i.e. avoiding formation of impurities, changes on polymorphic profile, bulk density, etc.

The gas stream may fed at a flowrate sufficient to cause the powder bed to be pushed against the permeable element to maximize relative velocity between the gas and the powder particles.

Preferably, the gas flow rate is in the range of about 0.06 kg/h to about 3.3 kg/h. Preferably, the gas flow rate is 0.06 kg /h, 0.17 kg/h, 0.28 kg/h, 0.5 kg/h or 3.3 kg/h.

In the drying process of the present invention, the ratio between drying gas flowrate and product mass may be at least 0.4 kg/h of gas per 1 kg of product. Preferably, the ratio between drying gas flowrate and product mass is in the range of about 0.4 to about 36 kg/h of gas per 1 kg of product.

The relative velocity between the gas and the powder may vary depending upon the product used and the gas flow rate. Preferably the relative velocity of the particles may be at least 0.05 cm/s. The relative velocity is preferably between the gas and the powder is in the range of about 0.05 to 0.25 cm/s.

The process described herein may be operated in a batch process, using a single unit.

The process described herein may be operated in a semi-continuous mode by combining several drying units. For instance, a semi-continuous process can be created by combining at least two dryers operating in parallel, while one is loading from the upstream process the other is drying the product.

The process described herein may be operated in a fully continuous mode by adding continuously wet powder by using a screw feeder (or equivalent technology) and by continuously discharge dry powder by using a screw unit. Such feeding and discharging units would be located at the limits of the drying chamber. Moreover, a fully continuous integrated process can be created by combining such dryer with an upstream continuous drying step such as spray drying.

These and other features of the invention will become more evident from the following description and drawings of the preferred embodiments.

### Brief Description of the Drawings:

The following figures provide preferred embodiments to illustrate the description but do not limit the scope of invention.
Figure 1 illustrates a simplified schematic diagram of an apparatus for drying of a pharmaceutical powder product in a batch process.
Figure 2 illustrates a simplified schematic diagram of an apparatus for drying of a pharmaceutical powder product in a batch process with two concentrically sintered tubes.

### Detailed Description of the Invention

The present invention discloses a method enabling a batch, semi-continuous or continuous drying for fine and cohesive pharmaceutical powder products (D_{V50} < 100 um) and with low density (< 0.6 g/ml).

The disclosed method was developed for drying of pharmaceutical products and intermediates such those arising from a spray drying units or similar technologies, where the solvent content in the product is above the limit defined by the international recommendation for pharmaceuticals products [1]. The pharmaceutical products may be amorphous materials produced by spray drying or similar technology. The pharmaceutical products may also be nanocrystals. Experiments performed by the inventors demonstrated that the removal rate of the solvent from the product is improved by increasing the drying gas flowrate and temperature. The increased relative velocity between the drying gas and the particles also improves the mass and heat transport.

In one aspect of the present invention, the ratio between drying gas flowrate and product mass was at least 0.4 (kg_{gas}/h)/kg_{product}) (varying from about 0.4 to about 0.38 (kg_{gas}/h)/kg_{product})). Preferably, the ratio between drying gas flowrate and product mass is 4 (kg/h)gas/kg_{powder}). It was found that a ratio between drying gas flowrate and product mass above 0.4 (kg_{gas}/h)/kg_{product} corresponds to a gas velocity above 0.25 cm/s.

Additionally, it was found that the use of a permeable element or porous membrane having preferably a porous diameter ≤ 1 µm, that is mechanically resistant and has with little affinity to the product being dried can effectively support the bed of powder and avoid clogging issues. The permeable element or porous membrane may be further supported or replaced by a sintered metal or polymer plate or support with higher mechanically stability.

The porosity of the permeable element should be such that it should retain the particles, yet should allow gas to flow.

The permeable element can be selected taking in account their chemical compatibility with solvents in the product or powder being dried and their physical properties (maximum operating temperature and hydrophobicity).The permeable element porosities can be selected taking into account that particle size of the product or pharmaceutical powder being dried.

Preferably, the permeable element such as porous membrane or filter has a pore size or diameter of ≤ 2 µm, or ≤ 1 µm. Preferably, the porosity of the permeable element may be in the range of 0.02 to 2 µm or 0.02 to 1 µm.

Preferably, the permeable element such as a porous membrane or filter is made of a material such as Teflon, PP, PVDF, PCTE or mixtures thereof, which has mechanical resistant and little affinity to the product being dried.

To favour solvent mass transfer from the particles to the drying gas the temperature must be as high as possible, but without compromising the physical-chemical properties of the final product.

The nature of the drying gas may also a role in the rate of removal of the solvent. Any suitable drying gas or other gas or gas mixture that does not promote undesirable reactions with the product may be used. Preferably, the drying gas is selected from the group consisting of: N2, CO2, air, and combinations or mixtures thereof. Preferably, the drying gas is carbon dioxide. In additional studies, the inventors found out that using carbon dioxide, has proved advantageous. Drying experiments with carbon dioxide showed a reduced solvent content in the final product when compared to nitrogen. Carbon dioxide has a higher heat capacity and in some cases a higher affinity to the surface of the particles than nitrogen and hence may displace the solvent more readily.

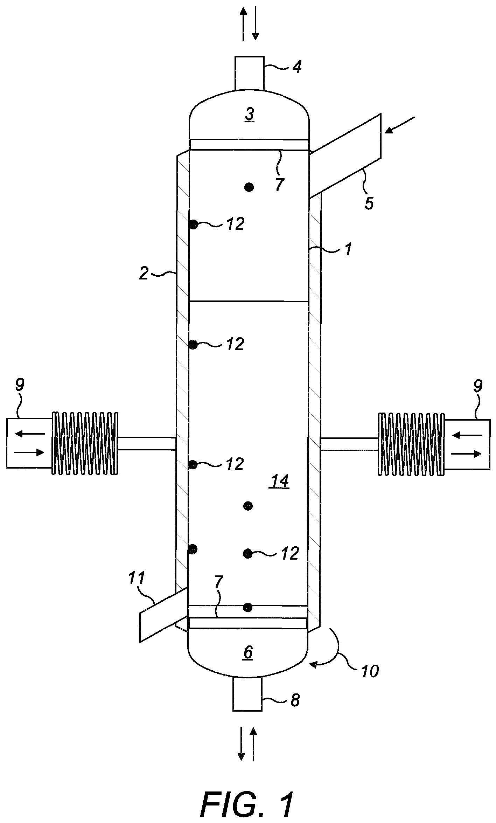

In one aspect of the present invention, the drying process is batch-wise process, carried out in a cylindrical apparatus, as illustrated in Figure 1. The apparatus comprises a cylindrical shape dryer (1), an electric heating system (2), a top cover (3), a valve for the drying gas inlet (4), a valve for gravitational feed (5), a bottom cover (6), a permeable element over a porous sintered metal plate (7), a valve for the drying gas outlet (8), a vibrating unit (9), a bottom cover opening mechanism (10), a sample valve (11) and temperature and/or pressure measurement points (12). The powder or product to be dried is loaded into the apparatus from the top through the feed door (5) until it reaches a pre-determined volume according to the drying characteristics of the powder. The powder settles over the permeable element supported by the sintered plate, which acts as a support and avoids the small particles to be dragged out. The drying process is initiated by turning on the electric heaters (2), distributed around the entire apparatus, and by introducing the drying gas (4). The temperature increased continuously along the drying time, following a predetermined heating ramp. Several thermocouples (12) are distributed along the apparatus to have precise readings in order to control the temperature. The drying gas, previously heated, is supplied to the apparatus downwards. The ratio between drying gas flowrate and product mass may be in the range of about 0.4 to about 38 (kg_{gas}/h)/kg_{product}), preferably above 4 (kg_{gas}/h)/kg_{product}). When the drying is completed, the bottom cover (10) opens completely taking along the permeable membrane and sintered plate, if present, and the dried product falls by gravity into a container. The vibrating unit (9) may be operated to apply vibration to the apparatus to help removing the powder from the dryer walls, and aids in avoiding the formation of agglomerates of powders inside the dryer.

Preferably, the gas pressure is periodically changed, from vacuum to pressure up to 10 bar, preferably between 2-4 bar. The apparatus of the present disclosure may be operated with pressure cycles of 60 s between 2-4 bar.

In another aspect of the present invention, the drying process is a semi-continuous process. In the semi-continuous process the apparatus comprises two drying units, and while one of the units is being loaded with product produced by the upstream drying technology (such as a spray dryer), the other is drying. The loading and drying processes are synchronized, in such a way that, as soon as the loading step of the first unit ends, the drying step in the second also ends; the first unit follows to the drying step and the second after being unloaded into a recipient (16) and initiates the loading step.

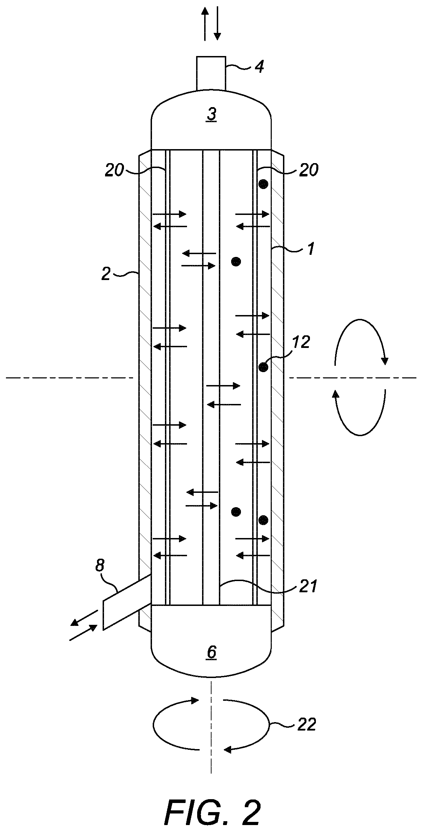

In another aspect of the present invention the drying process is a batch wise process, carried out in a cylindrical apparatus with two concentrically sintered tubes (20, 21), as illustrated in Figure 2. The apparatus comprises a cylindrical shape dryer (1), an electric heating system (2), a top cover (3), a valve for the drying gas inlet (4), a bottom cover (6), an outer sintered tube covered with a membrane (20) and inner sintered tube covered with a membrane (21), a valve for the drying gas outlet (8), a rotation unit (22), and several temperature and/or pressure measurement points (12).

The powder is loaded into the apparatus lying between the two concentrical sintered tubes (20, 21) until it reaches a predetermined volume according to the drying characteristics of the powder.

The drying process is initiated by turning on the electric heaters (2), distributed around the entire apparatus, and by introducing the drying gas (4). Several thermocouples (12) are distributed along the apparatus to control the temperature and to have precise readings. The drying gas, previously heated, is supplied to the apparatus. The gas direction is radial and can assume inward direction. Preferably, the ratio between drying gas flowrate and product mass is in the range of from about 1 to about 10 (kg_{gas}/h)/kg_{powder}. Rotation (9) can be introduced both in xx-axis as in yy-axis, this will allow a more uniform drying along the powder bed. Preferably, the dryer should operate with the drying gas flowing inwards. The drying gas direction may be occasionally inverted, avoiding formation of agglomerates during the fast-drying process.

In another aspect of the present invention there is provided use of a permeable element such as a filter or a porous membrane as described herein above, in a drying chamber to support a powder bed of a pharmaceutical product in a dryer for drying the residual solvent content of the pharmaceutical product to an acceptable level as per the industry standard.

In another aspect of the present invention there is provided use of a known drying apparatus, which may be used in combination with spray dryer, filter dryer, vacuum dryer or any other known dryer, for drying the residual solvent content of the pharmaceutical product to an acceptable level as per the industry standard by incorporating a permeable element to support the powder bed through which drying gas stream is applied.

In another aspect of the present invention there is provided particles or pharmaceutical products obtained by the drying method described herein.

### Example 1

The drying unit illustrated in Figure 1 was tested using copovidone, a polymer commonly used in pharmaceutical industry and particularly in spray dried dispersions, with a solvent (ethanol) content of *ca.* 5 wt%. The objective was to dry the product to the acceptable level of residual ethanol as per the established guidelines (i.e. below 5 000 ppm) [1] and within a few hours. A copovidone mass of 100 g was introduced through the gravitational feeding valve (5); the powder settled over the membrane/sintered plate (7). The membrane was a Teflon film with a pore size of 0.2 µm. The temperature was set to 50 °C using electric heaters (2) controlled by a PID control with temperature information provided by the thermocouples near to the cylinder wall (12). A gas flow rate of 0.28 kg/h was introduced downwards; in this case CO2. The system operated with pressure cycles of 60 s between 2-4 bar. Samples of the drying powder were collected every hour to evaluate the drying process; the samples were analysed by headspace gas chromatography. The process was compared to a tray drying at 50 °C with an atmosphere renovation of 2 h⁻¹ under vacuum (50 mbar) (Table 1). The previous tests were repeated at 70 °C (Table 1).

**Table 1 - Comparison of drying process 50 °C and 70 °C.**

| Drying technology | Temperature (°C) | Concentration at 1h (ppm) | Concentration at 2h (ppm) | Concentration at 3h (ppm) |
|---|---|---|---|---|
| Tray dryer | 50 | 19 594 | 14 013 | 10 362 |
| Invention (Fig.1) | 50 | 10 263 | 4 528 | 2 098 |
| Tray dryer | 70 | 5 453 | 2 291 | 1 188 |
| Invention (Fig.1) | 70 | 2 020 | 601 | 231 |

The results indicate the ethanol content using the present method (Invention) is 5 times lower than the reference tray dryer after 3 hours of drying using CO2 as drying gas.

### Example 2

The relationship between the drying product mass, temperature and flowrate was studied using the design of experiments (DOE). The DOE considered a three-level parameter full factorial (with a centre point) and using nitrogen as the drying gas. Accordingly, experiments were made in a drying unit similar to that illustrated in Figure 1 and considering three temperatures (40 °C, 55 °C and 70 °C), three flow rates (0.06 kg/h, 0.17 kg/h, 0.50 kg/h) and three masses of copovidone (13.3 g, 40 g and 120 g), all with an initial solvent (ethanol) content around 5 wt.%. In Table 2 are disclosed the experimental conditions and the main results obtained.

**Table 2 - DOE experiments and main results.**

| Exp | *mass* (g) | *Drying gas flow rate* (kg·h⁻¹) | *T* (°C) | bed height (cm) | Ethanol content in ppm along drying time (t) | | | |
|---|---|---|---|---|---|---|---|---|
| | | | | | 0 hrs | 1 hrs | 2 hrs | 3 hrs |
| 1 | 13.3 | 0.06 | 40 | 1 | 38865 | 17806 | 10956 | 8708 |
| 2 | 13.3 | 0.06 | 70 | 1 | 38063 | 3470 | 1956 | 1317 |
| 3 | 13.3 | 0.17 | 40 | 1 | 37103 | 13797 | 10101 | 8439 |
| 4 | 13.3 | 0.50 | 40 | 1 | 38976 | 14425 | 9929 | 7928 |
| 5 | 13.3 | 0.50 | 70 | 1 | 38724 | 4282 | 1874 | 1038 |
| 6 | 40 | 0.06 | 40 | 2 | 39125 | 18749 | 15152 | 13843 |
| 7 | 40 | 0.17 | 40 | 2 | 38886 | 16496 | 12433 | 10954 |
| 8 | 40 | 0.17 | 55 | 2 | 41303 | 10201 | 11306 | 4222 |
| 9 | 40 | 0.50 | 40 | 2 | 43230 | 14014 | 9793 | 8706 |
| 10 | 120 | 0.06 | 40 | 6 | 40381 | 26770 | 28225 | 23373 |
| 11 | 120 | 0.06 | 70 | 6 | 39922 | 22379 | 17615 | 6263 |
| 12 | 120 | 0.17 | 40 | 6 | 40298 | 23764 | 19686 | 14216 |
| 13 | 120 | 0.50 | 40 | 6 | 43022 | 20944 | 12926 | 9295 |
| 14 | 120 | 0.50 | 70 | 6 | 39024 | 10378 | 3509 | 1330 |

The results indicate that for larger amounts of product, the flow rate had an effect in the drying process and can significantly improve it. Moreover, the increase in product quantity can be compensated almost linearly by increasing gas flowrate; this observation was valid for all temperatures studied. Also, it was observed a great effect of temperature on the drying rate; in this case the relation between mass and temperature was almost linear in the range under study.

Moreover, it was observed that above a certain flowrate to mass ratio, the drying rate does not change significantly and reaches a plateau.

From the experiments conducted it was observed that the overall drying rate responds directly with the increase of gas velocity up to certain level. Then, the drying rate stabilizes, indicating that internal resistance controls the remaining overall drying process, which can be improved by increasing the temperature.

### Example 3

The effect on the drying process of different type of membranes with different porosity was evaluated using the drying unit previously mentioned (Figure 1). These tests also allowed to understand pressure drop and clogging phenomena in the membrane and sintered plate. The membranes were selected taking in account their chemical compatibility with solvents and their physical properties (maximum operating temperature and hydrophobicity). The selected membranes were PTFE, PCTE, PP and PVDF. The membrane porosities were 0.2 µm and 1 µm; these porosities were selected taking into account that the copovidone particle sizes ranged between 2.5 µm and 63 µm being the prevalent particle size around 20 µm. The experiments were performed using 120 g of copovidone at 55 °C with a N₂ flowrate of 0.5 kg/h (Table 3).

The ethanol content during the drying process was not affected by the type of membrane. The difference observed are small and may be attributed to the sampling and sample exposure processes.

**Table 3 - Drying results using different type of membranes.**

| Type | Porosity | Ethanol content in ppm along drying time (t) | | | | |
|---|---|---|---|---|---|---|
| Membrane | (*µ*m) | 0 hrs | 1 hrs | 2 hrs | 3 hrs | 6 hrs |
| PTFE laminated | 0.2 | 41833 | 10422 | 4734 | 3310 | 1487 |
| PTFE laminated (rep) | 0.2 | 45491 | 10360 | 5464 | 3337 | 1395 |
| PTFE laminated (rep) | 0.2 | 41104 | 11298 | 5781 | 3697 | 1395 |
| PTFE laminated | 1 | 43882 | 8067 | 4416 | 2973 | 1311 |
| PTFE unlaminated | 0.2 | 44817 | 9570 | 5451 | 3601 | 1480 |
| PTFE unlaminated | 1 | 45487 | 9282 | 5021 | 3280 | 1470 |
| PCTE | 0.2 | 43857 | 7596 | 5260 | 2982 | 1454 |
| PCTE | 1 | 41677 | 8952 | 4632 | 2664 | 1195 |
| PP | 0.2 | 49124 | 10403 | 4737 | 3814 | 1726 |
| PVDF | 0.2 | 49579 | 10929 | 5889 | 3729 | 1719 |

Additionally, pressure drop in the membrane/sintered plate was measured before, during and after experiments (Table 4). The results indicate that membranes with a pore size of 0.2 µm, not only have higher pressure drop, before tests, than the ones with 1 µm, but also have a higher pressure drop increase during the drying tests. Nevertheless, no significant blockage was observed for any of the tested membranes during several cycles of drying. Taking into account the experimental results and physical-chemical characteristics of the tested membranes, PTFE unlaminated with 1 µm porosity are more indicated to this particular application.

**Table 4 - Pressure drop in the membrane/sintered plate before, during and after the drying experiments.**

| **Type** | **Porosity** | **Membrane Pressure drop (bar)** | | |
|---|---|---|---|---|
| **Membrane** | **(µm)** | Before drying test | During drying test | After drying test |
| **PTFE laminated** | 0.2 | 0.031 | 0.180 | 0.066 |
| **PTFE laminated** | 1.0 | 0.021 | 0.084 | 0.029 |
| **PTFE unlaminated** | 0.2 | 0.058 | 0.150 | 0.061 |
| **PTFE unlaminated** | 1.0 | 0.021 | 0.077 | 0.027 |
| **PCTE** | 0.2 | 0.056 | 0.140 | 0.054 |
| **PCTE** | 1.0 | 0.028 | 0.061 | 0.031 |
| **PP** | 0.2 | 0.058 | 0.140 | 0.056 |
| **PVDF** | 0.2 | 0.120 | 0.190 | 0.120 |

### Example 4

The effect of the column height on the drying process, powder compaction and pressure drop were evaluated (Table 5) using the drying unit previously mentioned (Figure 1). The experiments were made at 55 °C with N₂ considering four copovidone masses (100 g, 200 g, 300 g and 400 g) and three flow rate/mass ratios (1, 2 and 4 (kg/h)_{gas}/kg_{powder}). The powder was previously passed through a sieve of 180 µm to remove any lump. In Table 5 are disclosed the experimental conditions and the main results obtained. The sieved powder after tests presented and average compaction level of 31% with no significant dependence on flowrate and initial height. As expected, the pressure drop increase with the flow and mass/height. Nevertheless, in any of the experiments, no blockage nor gradual pressure increase during drying was observed, endorsing the feasibility of this method. Additionally, the drying results confirmed the relation between mass and flow rate; for the same drying gas flowrate to mass ratio the drying results using 100 g were similar to those with 400 g.

**Table 5 - Pressure drop, bed compaction and drying results.**

| Mass (g) | Drying gas flow ratio ((kg/h)_{gas}/ kg_{powder}) | Δ*P*_{membrane} (bar) | Δ*P*_{bed} (bar) | *h*ᵢₙᵢₜᵢₐₗ (cm) | *h*_{final} (cm) | Compaction (%) | Ethanol content (ppm) | | |
|---|---|---|---|---|---|---|---|---|---|
| | | | | | | | 1h | 3h | 6h |
| 100 | *1* | - | - | - | - | - | 24332 | 5398 | 2584 |
| | 2 | 0.05 | 1.4 | 22 | 15 | 32 | 11344 | 4655 | 1783 |
| | 4 | 0.11 | 2.3 | 22 | 14 | 39 | | | |
| 200 | 2 | 0.11 | 3.6 | 43 | 30 | 30 | - | - | - |
| | 4 | 0.16 | 5.3 | 43 | 31 | 30 | - | - | - |
| 300 | 2 | 0.13 | 5.3 | 65 | 47 | 28 | - | - | - |
| | 4 | 0.2 | 7.3 | 65 | 47 | 28 | - | - | - |
| 400 | 1 | 0.11 | 6.3 | 90 | 61 | 32 | 20098 | 5262 | 2228 |

### Example 5

The drying unit illustrated in Figure 2 was tested using copovidone, with a solvent (ethanol) content of *ca.* 5 wt%. A copovidone mass of 890 g was introduced in the device in the vertical position, settling between the two concentring sintered tubes. After loaded and closed, the device was positioned in the horizontal. The device has an actuator to rotate < 270° (both directions). The temperature was set to 52 °C using electric heaters (2) controlled by a PID control with temperature information provided by the thermocouples near to the cylinder wall (12). A gas flow rate of 3.3 kg/h fed inwards. The pressure drop during the test was ca. 0.71 bar (only 0.08 bar was caused by the powder). Samples of the drying powder were collected after 3 hours in three different points to evaluate the drying process; the samples were analysed by headspace gas chromatography. Results presented in Table 6 indicate that it was possible to reach 5000 ppm in 3 hours and no major heterogeneity was observed comparing the three sampling points. Moreover, during the experiments, blockage or pressure increase during was not observed, supporting the feasibility of this method.

**Table 6 - Drying results at 52 °C.**

| Sample position | Mass (g) | Temp. (°C) | Flowrate (kg/h) | Δ*P*ᵤₙᵢₜ (bar) | Δ*P*_{bed} (bar) | Ethanol content (ppm) | |
|---|---|---|---|---|---|---|---|
| | | | | | | 0h | 3h |
| ¼ tube | 890 | 52 | 3.3 | 0.71 | 0.08 | 42 714 | 4 488 |
| ½ tube | | | | | | | 5 135 |
| ¾ tube | | | | | | | 4 513 |

### Bibliography

### Patent literature

US3475832A - Continuous fluid bed dryer, November 1986.
US5709036A - Aggressive convective drying in a conical screw type mixer/dryer, January 1998.
EP2043610A1 - Drying of drug-containing particles, March 2007
US4720924A - Microwave drying of pharmaceutical gelatin capsules, January 1988.
CA2594694A1 - Drying of drug-containing particles, January 2006
WO9513864 - A Process and a Spray Drying Apparatus for Producing An Agglomerated Powder
US20030230004A1 - Batch Fluid Bed Processor
WO2001089679A2 - Continuous production of pharmaceutical granulates, November 2001.
WO2003027590A3 - Method and device for drying pharmaceutical granulates, pellets or similar, April 2003.

### Other References

[1] "IMPURITIES: GUIDELINE FOR RESIDUAL SOLVENTS Q3C(R6), 4th version," in ICH HARMONISED GUIDELINE, vol. 4th version, 2016.
[2] K. R. Morris, S. L. Nail, G. E. Peck, S. R. Byrn, U. J. Griesser, J. G. Stowell, S.-J. Hwang and K. Park, "Advances in pharmaceutical material and procesing," Pharmaceutical science & technology today, pp. 235-245, 1998.
[3] F. J. Muzzio, T. Shinbrot and B. J. Glasser, "Powder technology in the pharmaceutical industry: the need to catch up fast," Powder Technology, pp. 1-7, 2002.
[4] W. R. W. Daud, "Fluidized Bed Dryers - Recent Advances," Advanced Powder Techology, pp. 403-418, 2008.
[5] D. Parikh, "Vacuum drying: basics and applications," Chemical Engineering, pp. 48-54, 2015.
[6] C. L. Hii, C. L. Law, M. Cloke and S. Suzannah, "Thin layer drying kinetics of cocoa and dried product quality," Biosystems Engineering, vol. 102, pp. 153-161, 2009.
[7] I. T. Administration, "2016 Top Markets Report - Pharmaceuticals," U.S. Department of Commerce, 2016.
[8] F. X. McConville, "Tips for Drying Active Pharmaceutical Ingredients," process HEATING, 2007*.*
[9] H. Leuenberger, "New trends in the production of pharmacetical granules: batch versus continuous processing," European Journal of Pharmaceutics and Biopharmaceutics, pp. 289-296, 2001.
[10] D.Geldart, "Types of Gas Fluidization," Powder Technology, vol. 7, pp. 285-292,1973.
The present invention also relates to the following clauses:
1. A method for drying the residual solvent content of a pharmaceutical product in the form of a powder, comprising:
   i) feeding the pharmaceutical powder into a drying chamber;
   ii) feeding a gas stream across a powder bed in the drying chamber; and
   iii) providing a permeable element to support the powder bed.
2. A method according to clause 1, wherein the gas stream flows, through the powder bed and the permeable element, downwards, upwards or radially.
3. A method according to clause 1 or 2, wherein the permeable element comprises a filter or a porous membrane.
4. A method according to any one of clauses 1 to 3, wherein the gas stream is heated prior to feeding it into the drying chamber.
5. A method according to any one of clauses 1 to 4, wherein the drying chamber surface is heated to the target drying temperature.
6. A method according to any one of clauses 1 to 5, wherein the gas stream is fed at a flowrate sufficient to cause the powder bed to be pushed against the permeable element to maximize relative velocity between the gas and the powder.
7. A method according to clause 6, wherein the ratio between the gas flowrate and product mass is at least 0.4 kg/h of gas per 1 kg of product.
8. A method according to clause 6, wherein the ratio between the gas flowrate and product mass is in the range of about 0.4 kg/h to about 36 kg/h of gas per 1 kg of product.
9. A method according to any one of the preceding clauses, wherein the relative velocity between the gas and the powder is at least 0.05 cm/s, optionally the relative velocity between the gas and the powder is in the range of about 0.05 to 0.25 cm/s.
10. A method according to any one of the preceding clauses, wherein the pharmaceutical product is an amorphous material produced by spray drying or any known drying technology.
11. A method according to any one of the preceding clauses, wherein the temperature of the gas stream is between the room temperature and the melting temperature or the glass transition temperature of the pharmaceutical product.
12. A method according to any one of the preceding clauses, wherein the gas is selected from a group consisting of: nitrogen (N2), carbon-dioxide (CO2), air and mixtures thereof.
13. A method according to any one of the preceding clauses, further comprises vibrating or agitating the drying chamber to mitigate clogging of the powder in the permeable element.
14. A method according to any one of the preceding clauses, wherein the gas pressure is periodically changed, from vacuum to pressure up to 10 bar.
15. A method according to any one of the preceding clauses, wherein the permeable element is made of a material selected from the group consisting of: PTFE (Teflon), PP, PVDF, PCTE and combinations thereof.
16. A method according to any one of the preceding clauses, wherein the permeable element has porosities in the range of about 0.2 µm to about 2 µm or 0.2 µm to about 1 µm.
17. A method according to any one of the preceding clauses, wherein the permeable element is supported or replaced by a sintered metal or polymer plate.
18. A method according to any one of the preceding clauses, wherein the method is a batch process, using a single unit, a semi-continuous process by combining at least two units in parallel, or a fully continuous process.
19. Use of a permeable element in a drying chamber to support a powder bed of a pharmaceutical product in the form of a powder in a dryer for drying the residual solvent content of the pharmaceutical product.

## Claims

1. A method for drying the residual solvent content of a pharmaceutical product in the form of a powder, comprising:
i) feeding the pharmaceutical powder into a drying chamber;
ii) feeding a gas stream across a powder bed in the drying chamber; and
iii) providing a permeable element to support the powder bed,
wherein the gas stream is fed at a flowrate sufficient to cause the powder bed to be pushed against the permeable element to maximize relative velocity between the gas and the powder.

2. A method according to claim 1, wherein the ratio between the gas flowrate and product mass is at least 0.4 kg/h of gas per 1 kg of product.

3. A method according to claim 1, wherein the ratio between the gas flowrate and product mass is in the range of about 0.4 kg/h to about 36 kg/h of gas per 1 kg of product.

4. A method according to any one of the preceding claims, wherein the relative velocity between the gas and the powder is at least 0.05 cm/s, optionally the relative velocity between the gas and the powder is in the range of about 0.05 to 0.25 cm/s.

5. A method according to any preceding claim, wherein the gas stream is heated prior to feeding it into the drying chamber, and/or wherein the drying chamber surface is heated to the target drying temperature.

6. A method according to any one of the preceding claims, wherein the pharmaceutical product is an amorphous material produced by spray drying or any known drying technology.

7. A method according to any one of the preceding claims, wherein the temperature of the gas stream is between the room temperature and the melting temperature or the glass transition temperature of the pharmaceutical product.

8. A method according to any one of the preceding claims, wherein the gas is selected from a group consisting of: nitrogen (N2), carbon-dioxide (CO2), air and mixtures thereof.

9. A method according to any one of the preceding claims, further comprises vibrating or agitating the drying chamber to mitigate clogging of the powder in the permeable element.

10. A method according to any one of the preceding claims, wherein the gas pressure is periodically changed, from vacuum to pressure up to 10 bar.

11. A method according to any one of the preceding claims, wherein the permeable element:
(a) comprises a filter or a porous membrane;
(b) is made of a material selected from the group consisting of: PTFE (Teflon), PP, PVDF, PCTE and combinations thereof;
(c) has porosities in the range of about 0.2 µm to about 2 µm or 0.2 µm to about 1 µm; and/or
(d) is supported or replaced by a sintered metal or polymer plate.

12. A method according to any one of the preceding claims, wherein the method is a batch process, using a single unit, a semi-continuous process by combining at least two units in parallel, or a fully continuous process.

13. Use of a permeable element in a drying chamber to support a powder bed of a pharmaceutical product in the form of a powder in a dryer for drying the residual solvent content of the pharmaceutical product, wherein during drying the permeable element supports the powder bed against the flow of a drying gas such that the relative velocity between the gas and the powder can be maximised.

14. Use according to claim 13, wherein the relative velocity between the gas and the powder is at least 0.05 cm/s, optionally the relative velocity between the gas and the powder is in the range of about 0.05 to 0.25 cm/s.
